# EUROPEAN PATENT SPECIFICATION

(11) **EP 2 604 901 B1**
(45) Date of publication and mention of the grant of the patent: **17.10.2018**
(21) Application number: 12197094.1
(22) Date of filing: 13.12.2012
(51) Int. Cl.: F16L 19/00, F16L 41/02, F16L 41/03, F16L 43/00

(54) **Fitting for use with nut with internal locking mechanism**
Fitting für die Verwendung mit einer Buchse mit internem Verriegelungsmechanismus
Raccord destiné à être utilisé avec un écrou avec un mécanisme de verrouillage interne

(30) Priority: 13.12.2011 US 201113323972; 11.12.2012 US 201213711148
(43) Date of publication of application: 19.06.2013
(73) Proprietor: United Technologies Corporation, Farmington, CT 06032 (US)
(72) Inventor: Murphy, Richard M., East Hampton, CT Connecticut 9 Lakewood Road (US); Bunting, Billie W., Colchester, CT Connecticut 06415 (US); Mutsengi, Fungayi, Bloomfield, CT Connecticut 06002 (US); Anderson, David W., South Windsor, CT Connecticut 06074 (US); DeRosa, Robert J., Tolland, CT Connecticut 06084 (US)
(74) Representative: Dehns

(56) References cited:
- US-A- 3 486 771
- US-A1- 2005 151 370
- US-A1- 2007 164 566
- US-B2- 7 600 789

## Description

### BACKGROUND

The present invention relates to tube fittings.

Fittings, couplings, reducers or ferrules, typically refer to objects used for fastening or joining other objects, such as two tubes. Fittings used for joining tubes are commonly made of metal and are engaged by a locking mechanism, such as a nut. When fittings join two tubes, one tube mechanically attaches to one end of the fitting and the other tube usually requires a coupling device to secure to the other end of the fitting. Fittings used in aerospace applications also typically require a locking feature to ensure the locking mechanism stays engaged to the fitting and does not unintentionally loosen (due to vibrations, wear or other causes). The locking mechanism can be lockwire. Lockwire is braided wire that can connect to the nut, securing the ferrule to a coupling and/or to another object to ensure that connections stay engaged. An alternative type of locking mechanism includes a nut engaging a coupling device. US 2005/0151370 A1 and US 7 600 789 B2 disclose each a lockwireless anti-rotation fitting for connecting two pipes together.

### SUMMARY

According to a first aspect, there is provided a fitting for use with a nut with an internal locking mechanism, the fitting comprising: a first tubular portion with a first end and a first outer diameter for connecting to a first object; a second tubular portion with a second end and a second outer diameter for connecting to a second object; and a transition portion connecting the first tubular portion and the second tubular portion for fluid communication between the first tubular portion and the second tubular portion; and characterised by a plurality of pockets spaced circumferentially around the second tubular portion to engage the internal locking mechanism of the nut, wherein each of the plurality of pockets extends radially into the second tubular portion and has a perimeter on all sides of each of the plurality of pockets at the second outer diameter.

According to a second aspect, there is provided a method of assembling a fitting for use with a nut with an internal locking mechanism and a fastener, the method comprising: connecting a first tube to the fitting, the fitting comprising: a first tubular portion with a first end and a first outer diameter for connecting to a first object, a second tubular portion with a second end and a second outer diameter for connecting to a second object, a plurality of pockets spaced circumferentially around the second tubular portion to engage the internal locking mechanism of the nut, wherein each of the plurality of pockets extends radially into the second tubular portion and has a perimeter on all sides of each of the plurality of pockets at the second outer diameter, and a transition portion connecting the first tubular portion to the second tubular portion for fluid communication between the first tubular portion and the second tubular portion; connecting a second tube to a coupling member with a fastener; connecting the coupling member to the second tubular portion of the fitting; and connecting the nut over the fitting and coupling member so that the internal locking mechanism of the nut engages the plurality of pockets of the fitting and the fastener of the nut engages the fastener of the coupling member to lock the fitting with the first tube to the coupling member with the second tube.

### BRIEF DESCRIPTION OF THE DRAWINGS

FIG. 1A is a perspective view of an elbow fitting.
FIG. 1B is a cross-sectional view of the fitting of FIG. 1A.
FIG. 1C is a cross-sectional view of the fitting of FIG. 1A with a first tube and a second tube connected.
FIG. 2 is a perspective view of a tee fitting.
FIG. 3 is a perspective view of a wye fitting.

### DETAILED DESCRIPTION

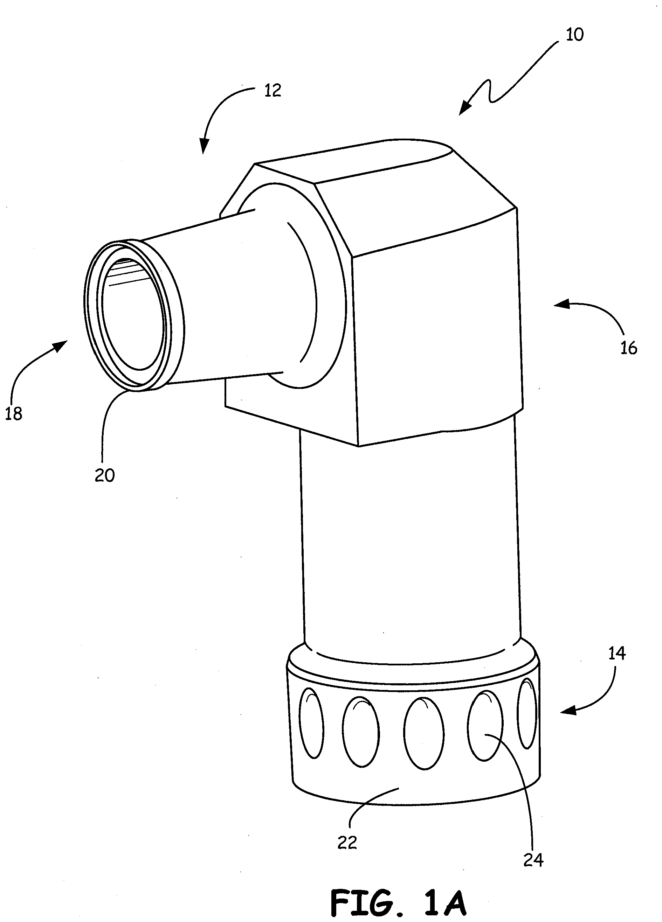

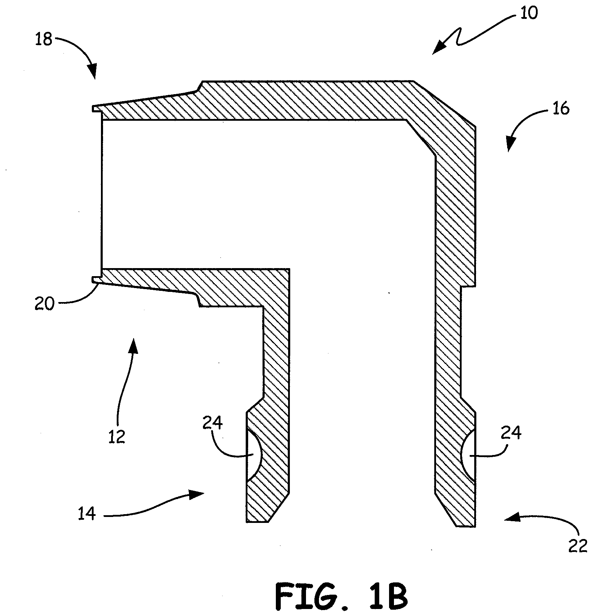

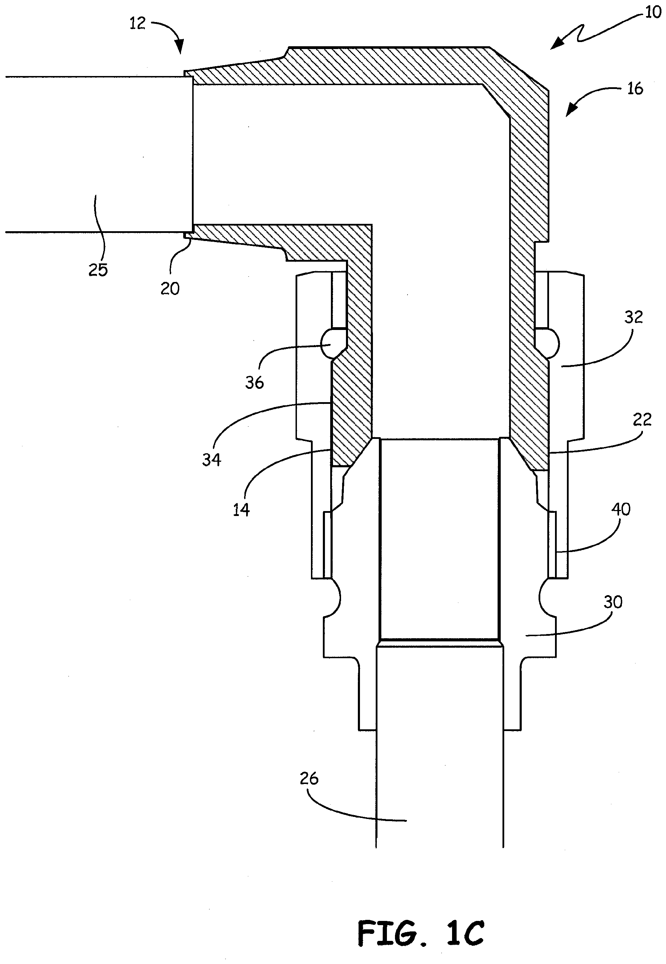

FIG. 1A is a perspective view of elbow fitting 10. FIG. 1B is a cross-sectional view of fitting 10 of FIG. 1A. FIG. 1C is a cross-sectional view of fitting 10 with a first tube and a second tube connected. While FIGS. 1A-1C show an elbow fitting, an elbow reducer could also be used.

Elbow fitting 10 includes first tubular portion 12, second tubular portion 14 and transition portion 16. First tubular portion 12 includes first end 18 with lip 20 and includes a first taper. Second portion 14 includes second end 22 and a plurality of pockets 24 equally spaced circumferentially around second portion 14. FIG. 1C further includes first tube 25, second tube 26, coupling member 30 and nut 32 with engagement mechanism 34 and thrust wire 36. Engagement mechanism 34 can be a spring loaded part or any other part that can engage pockets 24 to secure fitting 10 to coupling member 30.

Fitting 10 can be made of stainless steel, nickel (including alloys), corrosion resistant steels (including ferrous based alloys), titanium (including alloys) or other metals depending on requirements. Fitting 10 can be made by machining, forging, casting or other methods depending on materials used and fitting specifications.

In the fitting 10 shown in FIGS. 1A-1C, first portion 12 includes a first taper of about four degrees and second portion 14 includes a second taper from transition portion 16 of about one degree. Pockets 24 have a depth of about 0.040 inches (1.016 mm) to about 0.050 inches (1.27 mm) and are oval in shape. In the embodiment shown, transition portion 16 is a ninety degree bend connecting first tubular portion 12 with second tubular portion 14. In alternative embodiments, transition portion 16 could be any bend in the range of forty five degrees to one hundred and thirty five degrees. Transition portion 16 can be formed separately from first portion 12 and second portion 14, and then joined together or transition portion 15 can be formed integral with first portion 12 and second portion 14.

Pockets 24 are formed around outer circumference of second portion 14 so they are not affected by transition portion 16 shape or structure or by connection of a tube to first end 20. Pockets 24 can be located a distance from end 22 of second portion 14 to lessen stress levels in second end 22. Size, shape, amount and placement of pockets are dependent on system requirements and can vary. For example, pockets can be larger or smaller than pockets shown. Additionally, alternative embodiments of fitting 10 can include fewer or more pockets.

First tube 25 connects to lip 20 of first end 18 of ferrule 10. First tube 25 can be welded into lip 20 of first end 18. Alternatively, first tube 25 can be brazed or inertia bonded to lip 20 of first end 18. Second tube 26 connects to coupling member 30. This can be a welded, brazed or bonded connection. Nut 32 fits around fitting 10.

As seen in FIG. 1C, first tube 25 and second tube 26 are joined by fitting 10. Specifically, coupling member 30 is connected to second end 22 of fitting 10. Nut 32 slides toward coupling member 30 to connect to fitting 10 and coupling member 30. Nut 32 connects to fitting 10 through engagement mechanism 34 engaging pockets 24 of fitting 10 and through thrust wire 36. Thrust wire 36 connects to fitting 10 on transition portion 16 of fitting 10 and works to ensure nut 32 does not slip over transition portion 16 of fitting 10. Nut 32 connects to coupling member 30 through threaded connection 40.

When first tube 25 is connected to second tube 26 through coupling member 30 and fitting 10, nut 32 holds coupling member 30 and fitting 10 together through threads 40. Engagement mechanism 34 engages pockets 24 of fitting 10 to provide anti-rotation force to nut
32, ensuring that nut 32 stays securely connected through threads 40 and does not loosen or back off. This ensures that first tube 25 stays securely connected to second tube 26.

Through the use of fitting 10 with first portion 12, second portion 14, transition portion 16 and pockets 24 for engagement with engagement mechanism 34 of nut 32, fitting 10 securely joins tubes 25, 26 perpendicularly to each other, allowing fluid communication between the two tubes 25, 26 without requiring the lockwire which prior fittings often needed. As mentioned, prior art fittings, such as ferrules, typically required lockwire to secure the nut and ensure that it did not loosen or back out. The lockwire was attached to the outside of the nut and to another object (coupling member, tube, etc.). This created a system that needed more space and left the lockwire exposed and in danger of breaking. A break in one or more of the braids of the lockwire could leave the tube in danger of disengaging. Additionally, the production of lockwire is costly, due to the need to braid the wires to add strength. The current system eliminates the need to use lockwire by placing a plurality of pockets 24 around the circumference of fitting 10 to be engaged by internal engagement mechanism 34 of nut 32. This internal engagement provides the anti-rotation force to ensure nut 32 does not loosen while eliminating the need for expensive and sometimes hazardous systems using lockwire.

To allow for a smooth retraction of nut 32 from fitting 10, pockets 24 can have a gradual transition. This smooth, gradual transition reduces the amount of force required to pull engagement mechanism 34 from pockets 24, allowing for easier disassembly of tubes.

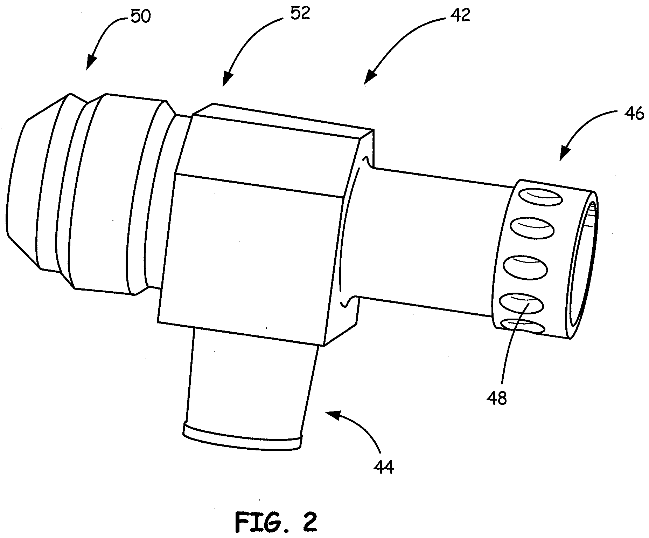

FIG. 2 is a perspective view of tee (or "T") fitting 42 with first tubular portion 44, second tubular portion 46 (with pockets 48), third tubular portion 50 and transition portion 52. Tee fitting 42 is called a "tee fitting" due to transition portion 52 having a "T" shape, able to connect three tubes (not shown) to be in fluid communication with each other.

First tubular portion 44 can include a first taper and can connect to a first tube by welding, brazing, bonding or other means. Second tubular portion 46 can connect to a second tube using a coupling member 30 and nut 32 with internal locking mechanism, as shown in FIG. 1C. Third tubular portion 50 can connect to a third tube using a variety of connection mechanisms, including a nut 32 with internal locking mechanism to engage outer pockets (similar to pockets 48) on an end of the third tube.

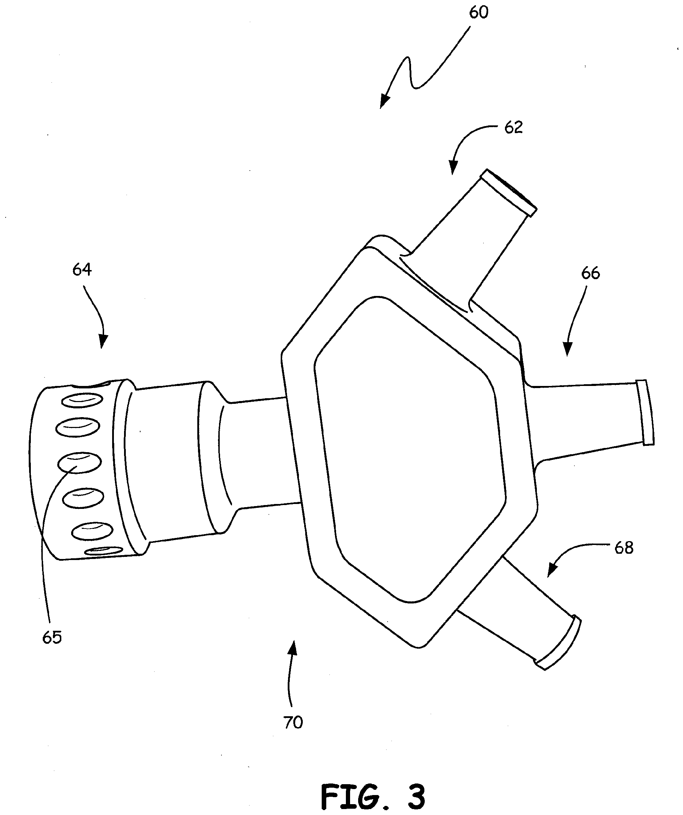

FIG. 3 is a perspective view of wye (or "Y") fitting 60, due to transition portion 70 having a "Y" shape. Fitting 60 includes first tubular portion 62, second tubular portion 64 with pockets 65, third tubular portion 66, fourth tubular portion 68, and transition portion 70.

First tubular portion 62, third tubular portion 66 and fourth tubular portion 68 can connect to tubes by welding, bonding, brazing or other means. Second tubular portion 64 can connect to a tube using a nut 32 with internal locking mechanism and a coupling device 30, as seen in FIG. 1C.

Transition portion 70 of fitting 60 connects first, third and fourth tubular portions 62, 66, 68 with second tubular portion 64, to allow fluid communication between them. This allows for the connecting of a plurality of tubes or pipes (not shown). Fitting 60 is called a wye fitting because it can connect at least one tube (through a tubular portion, for example first tubular portion 62) with another tube (through another tubular portion, for example, second tubular portion 64) at an angle of up to forty five degrees. This allows for a smooth fluid flow between connecting tubes.

In summary, all of fittings 10, 42 and 60 allow for the connection of a plurality of tubes or pipes by forming one end with circumferentially spaced outer pockets for use with a nut with an internal locking mechanism. The shape and design of transition portion 16, 52 and 70 can allow a variety of tubes to be connected together for a variety of different situations without the need for a lot of external locking mechanisms of past fittings.

Additionally, by forming engagement mechanism 34 internally to the fitting, fittings 10, 42 and 60 can have a similar (if not identical) envelope to prior art fittings and ferrules, allowing for the replacement. This allows fittings 10, 42 and 60 to be able to accommodate current tubes (and coupling members) in use, needing to replace the fitting and nut in the system with fitting 10, 42, 60 or fittings of other shapes not specifically shown here and nut 32. Forming fittings 10, 42 and 60 with a plurality of pockets 24 for engagement also allows for fittings 10, 42 and 60 to be used with a variety of different nuts so long as the nut includes a means for engaging pockets 24.

While the invention has been described in reference to using a nut with an internal locking mechanism with fittings 10, 42 and 60, this is for example purposes only and other types of engagement mechanisms can be used. Specific dimensions, shapes and sizes are given for example purposes only, and can vary depending on system requirements.

While the term "fitting" is used to refer to the devices in FIGS. 1A-3, the devices could be reducers or other types of devices that connect a plurality of tubes using a nut with an internal locking mechanism which connects to circumferentially spaced pockets.

While the invention has been described with reference to an exemplary embodiment(s), it will be understood by those skilled in the art that various changes may be made and equivalents may be substituted for elements thereof without departing from the scope of the invention as defined in the appended claims. In addition, many modifications may be made to adapt a particular situation or material to the teachings of the invention without departing from the scope thereof. Therefore, it is intended that the invention not be limited to the particular embodiment(s) disclosed, but that the invention will include all embodiments falling within the scope of the appended claims.

## Claims

1. A fitting (10;42;60) for use with a nut (32) with an internal locking mechanism (34), the fitting comprising:
a first tubular portion (12;44;62) with a first end (18) and a first outer diameter for connecting to a first object;
a second tubular portion (14;46;64) with a second end (22) and a second outer diameter for connecting to a second object; and
a transition portion (16;52;70) connecting the first tubular portion and the second tubular portion for fluid communication between the first tubular portion and the second tubular portion; and **characterised by** a plurality of pockets (24;48;65) spaced circumferentially around the second tubular portion to engage the internal locking mechanism of the nut, wherein each of the plurality of pockets extends radially into the second tubular portion and has a perimeter on all sides of each of the plurality of pockets at the second outer diameter.

2. The fitting of claim 1, wherein the fitting is an elbow fitting (10).

3. The fitting of claim 2, wherein the transition portion comprises a forty-five degree bend or a ninety degree bend between the first tubular portion and the second tubular portion.

4. The fitting of claim 1, wherein the fitting is a tee fitting (42).

5. The fitting of claim 4, wherein the tee fitting transition portion includes a ninety degree bend between the first tubular portion and the second tubular portion.

6. The fitting of claim 1, wherein the fitting is a wye fitting (60).

7. The fitting of claim 6, and further comprising:
a third tubular portion (50) with a third end and a third outer diameter for connecting to a third object.

8. The fitting of claim 7, wherein the first tubular portion and the third tubular portion connect to the second tubular portion at up to 45 degree angles.

9. The fitting of claim 7 or 8, and further comprising:
at least one additional tubular portion connecting to the transition portion to allow fluid communication between the second tubular portion and the first, third and at least one additional tubular portions.

10. A fitting as claimed in any preceding claim for joining a plurality of tubes, the fitting comprising:
a nut (32) with an internal locking mechanism (34);
said first tubular portion with a first end for connecting to a first tube (25); and
said second tubular portion with a second end for connecting to a second tube (26).

11. The fitting of any preceding claim, wherein the first tubular portion is tapered.

12. A method of assembling a fitting (10;42;60) for use with a nut (32) with an internal locking mechanism (34) and a fastener, the method comprising:
connecting a first tube (25) to the fitting, the fitting comprising:
a first tubular portion (12;44;62) with a first end (18) and a first outer diameter for connecting to a first object,
a second tubular portion (14;46;64) with a second end (22) and a second outer diameter for connecting to a second object,
a plurality of pockets (24;48;65) spaced circumferentially around the second tubular portion to engage the internal locking mechanism of the nut, wherein each of the plurality of pockets extends radially into the second tubular portion and has a perimeter on all sides of each of the plurality of pockets at the second outer diameter, and
a transition portion (16;52;70) connecting the first tubular portion to the second tubular portion for fluid communication between the first tubular portion and the second tubular portion;
connecting a second tube (26) to a coupling member with a fastener;
connecting the coupling member to the second tubular portion of the fitting; and
connecting the nut over the fitting and coupling member so that the internal locking mechanism of the nut engages the plurality of pockets of the fitting and the fastener of the nut engages the fastener of the coupling member to lock the fitting with the first tube to the coupling member with the second tube.

13. The method of claim 12, and further comprising:
connecting one or more additional tubes to one or more additional tubular portions of the fitting, wherein the one or more additional tubular portions of the fitting are in fluid communication with the first and second tubular portions.

14. The method of claim 12 or 13, wherein the first tube is connected to the fitting by welding, brazing or bonding.

15. The method of claim 12, 13 or 14, wherein the fitting is a wye fitting (60), a tee fitting (42) or an elbow fitting (10).

## Patentansprüche

1. Fitting (10; 42; 60) zur Verwendung mit einer Buchse (32) mit einem internen Verriegelungsmechanismus (34), wobei das Fitting Folgendes umfasst:
einen ersten Rohrabschnitt (12; 44; 62) mit einem ersten Ende (18) und einem ersten Außendurchmesser zum Verbinden mit einem ersten Objekt;
einen zweiten Rohrabschnitt (14; 46; 64) mit einem zweiten Ende (22) und einem zweiten Außendurchmesser zum Verbinden mit einem zweiten Objekt; und
einen Übergangsabschnitt (16; 52; 70), der den ersten Rohrabschnitt und den zweiten Rohrabschnitt für Fluidkommunikation zwischen dem ersten Rohrabschnitt und dem zweiten Rohrabschnitt verbindet; und **gekennzeichnet durch**
eine Vielzahl von Aussparungen (24; 48; 65), die in Umfangsrichtung in Abständen um den zweiten Rohrabschnitt angeordnet sind, um den internen Verriegelungsmechanismus der Buchse in Eingriff zu nehmen, wobei sich jede der Vielzahl von Aussparungen radial in den zweiten Rohrabschnitt hinein erstreckt und an allen Seiten jeder der Vielzahl von Aussparungen am zweiten Außendurchmesser einen Rand aufweist.

2. Fitting nach Anspruch 1, wobei das Fitting ein Winkelfitting (10) ist.

3. Fitting nach Anspruch 2, wobei der Übergangsabschnitt eine Fünfundvierzig-Grad-Krümmung oder eine Neunzig-Grad-Krümmung zwischen dem ersten Rohrabschnitt und dem zweiten Rohrabschnitt umfasst.

4. Fitting nach Anspruch 1, wobei das Fitting ein T-Fitting (42) ist.

5. Fitting nach Anspruch 4, wobei der T-Fitting-Übergangsabschnitt eine Neunzig-Grad-Krümmung zwischen dem ersten Rohrabschnitt und dem zweiten Rohrabschnitt beinhaltet.

6. Fitting nach Anspruch 1, wobei das Fitting ein Y-Fitting (60) ist.

7. Fitting nach Anspruch 6, ferner umfassend:
einen dritten Rohrabschnitt (50) mit einem dritten Ende und einem dritten Außendurchmesser zum Verbinden mit einem dritten Objekt.

8. Fitting nach Anspruch 7, wobei der erste Rohrabschnitt und der dritte Rohrabschnitt in einem Winkel von bis zu 45 Grad mit dem zweiten Rohrabschnitt verbunden sind.

9. Fitting nach Anspruch 7 oder 8 und ferner umfassend:
mindestens einen zusätzlichen Rohrabschnitt, der mit dem Übergangsabschnitt verbunden ist, um Fluid-kommunikation zwischen dem zweiten Rohrabschnitt und dem ersten, dritten und mindestens einen zusätzlichen Rohrabschnitt zu ermöglichen.

10. Fitting nach einem der vorhergehenden Ansprüche zum Verbinden einer Vielzahl von Rohren, wobei das Fitting Folgendes umfasst:
eine Buchse (32) mit einem internen Verriegelungs-mechanismus (34);
den ersten Rohrabschnitt mit einem ersten Ende zum Verbinden mit einem ersten Rohr (25); und
den zweiten Rohrabschnitt mit einem zweiten Ende zum Verbinden mit einem zweiten Rohr (26).

11. Fitting nach einem der vorhergehenden Ansprüche, wobei der erste Rohrabschnitt konisch zuläuft.

12. Verfahren zum Zusammenbauen eines Fittings (10; 42; 60) zur Verwendung mit einer Buchse (32) mit einem internen Verriegelungsmechanismus (34) und einer Befestigungsvorrichtung, wobei das Verfahren Folgendes umfasst:
Verbinden eines ersten Rohrs (25) mit dem Fitting, wobei das Fitting Folgendes umfasst:
einen ersten Rohrabschnitt (12; 44; 62) mit einem ersten Ende (18) und einem ersten Außendurchmesser zum Verbinden mit einem ersten Objekt,
einen zweiten Rohrabschnitt (14; 46; 64) mit einem zweiten Ende (22) und einem zweiten Außendurchmesser zum Verbinden mit einem zweiten Objekt,
eine Vielzahl von Aussparungen (24; 48; 65), die in Umfangsrichtung in Abständen um den zweiten Rohrabschnitt angeordnet sind, um den internen Verriegelungsmechanismus der Buchse in Eingriff zu nehmen, wobei sich jede der Vielzahl von Aussparungen radial in den zweiten Rohrabschnitt hinein erstreckt und an allen Seiten jeder der Vielzahl von Aussparungen am zweiten Außendurchmesser einen Rand aufweist, und
einen Übergangsabschnitt (16; 52; 70), der den ersten Rohrabschnitt für Fluidkommunikation zwischen dem ersten Rohrabschnitt und dem zweiten Rohrabschnitt mit dem zweiten Rohrabschnitt verbindet;
Verbinden eines zweiten Rohrs (26) mit einem Kopplungselement mithilfe einer Befestigungs-vorrichtung;
Verbinden des Kopplungselements mit dem zweiten Rohrabschnitt des Fittings; und
Verbinden der Buchse so über das Fitting und das Kopplungselement, dass der interne Verriegelungs-mechanismus der Buchse die Vielzahl von Aussparungen des Fittings in Eingriff nimmt und die Befestigungsvorrichtung der Buchse die Befestigungs-vorrichtung des Kopplungselements in Eingriff nimmt, um das Fitting mit dem ersten Rohr am Kopplungselement mit dem zweiten Rohr zu verriegeln.

13. Verfahren nach Anspruch 12 und ferner umfassend:
Verbinden eines oder mehrerer zusätzlicher Rohre mit einem oder mehreren zusätzlichen Rohrabschnitten des Fittings, wobei der eine oder die mehreren zusätzlichen Rohrabschnitte des Fittings in Fluidkommunikation mit dem ersten und dem zweiten Rohrabschnitt stehen.

14. Verfahren nach Anspruch 12 oder 13, wobei das erste Rohr durch Schweißen, Löten oder Kleben mit dem Fitting verbunden wird.

15. Verfahren nach Anspruch 12, 13 oder 14, wobei das Fitting ein Y-Fitting (60), ein T-Fitting (42) oder ein Winkelfitting (10) ist.

## Revendications

1. Raccord (10; 42; 60) destiné à être utilisé avec un écrou (32) avec un mécanisme de verrouillage interne (34), le raccord comprenant :
une première partie tubulaire (12 ; 44 ; 62) avec une première extrémité (18) et un premier diamètre externe pour se raccorder à un premier objet ;
une deuxième partie tubulaire (14 ; 46 ; 64) avec une deuxième extrémité (22) et un deuxième diamètre externe pour se raccorder à un deuxième objet ; et
une partie de transition (16 ; 52 ; 70) raccordant la première partie tubulaire et la deuxième partie tubulaire pour une communication fluidique entre la première partie tubulaire et la deuxième partie tubulaire ; et **caractérisé par**
une pluralité de poches (24; 48 ; 65) espacée circonférentiellement autour de la deuxième partie tubulaire pour venir en prise avec le mécanisme de verrouillage interne de l'écrou, dans lequel chacune de la pluralité de poches s'étend radialement dans la deuxième partie tubulaire et a un périmètre sur tous les côtés de chacune de la pluralité de poches au deuxième diamètre externe.

2. Raccord selon la revendication 1, dans lequel le raccord est un raccord coudé (10).

3. Raccord selon la revendication 2, dans lequel la partie de transition comprend une courbure de quarante-cinq degrés ou une courbure de quatre-vingt-dix degrés entre la première partie tubulaire et la deuxième partie tubulaire.

4. Raccord selon la revendication 1, dans lequel le raccord est un raccord en T (42).

5. Raccord selon la revendication 4, dans lequel la partie de transition du raccord en T comprend une courbure de quatre-vingt-dix degrés entre la première partie tubulaire et la deuxième partie tubulaire.

6. Raccord selon la revendication 1, dans lequel le raccord est un raccord en Y (60).

7. Raccord selon la revendication 6, comprenant en outre :
une troisième partie tubulaire (50) avec une troisième extrémité et un troisième diamètre externe pour se raccorder à un troisième objet.

8. Raccord selon la revendication 7, dans lequel la première partie tubulaire et la troisième partie tubulaire se raccordent à la deuxième partie tubulaire avec des angles allant jusqu'à 45 degrés.

9. Raccord selon la revendication 7 ou 8 et comprenant en outre :
au moins une partie tubulaire supplémentaire se raccordant à la partie de transition pour permettre une communication fluidique entre la deuxième partie tubulaire et la première, la troisième et au moins une partie tubulaire supplémentaire.

10. Raccord selon une quelconque revendication précédente pour joindre une pluralité de tubes, le raccord comprenant :
un écrou (32) avec un mécanisme de verrouillage interne (34) ; ladite première partie tubulaire avec une première extrémité pour se raccorder à un premier tube (25) ; et
ladite deuxième partie tubulaire avec une deuxième extrémité pour se raccorder à un second tube (26).

11. Raccord selon une quelconque revendication précédente, dans lequel la première partie tubulaire est filetée.

12. Procédé d'assemblage d'un raccord (10; 42; 60) pour utilisation avec un écrou (32) dans un mécanisme de verrouillage interne (34) et une fixation, le procédé comprenant :
le raccordement d'un premier tube (25) au raccord, le raccord comprenant :
une première partie tubulaire (12 ; 44 ; 62) avec une première extrémité (18) et un premier diamètre externe pour se raccorder à un premier objet ;
une deuxième partie tubulaire (14 ; 46 ; 64) avec une deuxième extrémité (22) et un deuxième diamètre externe pour se raccorder à un deuxième objet ;
une pluralité de poches (24; 48; 65) espacées circonférentiellement autour de la deuxième partie tubulaire pour venir en prise avec le mécanisme de verrouillage interne de l'écrou, dans lequel chacune de la pluralité de poches s'étend radialement dans la deuxième partie tubulaire et a un périmètre sur tous les côtés de chacune de la pluralité de poches au deuxième diamètre externe ; et
une partie de transition (16 ; 52 ; 70) raccordant la première partie tubulaire à la deuxième partie tubulaire pour une communication fluidique entre la première partie tubulaire et la deuxième partie tubulaire ;
le raccordement d'un second tube (26) à un élément de couplage avec une fixation ;
le raccordement de l'élément de couplage à la deuxième partie tubulaire du raccord ; et
le raccordement de l'écrou par-dessus le raccord et l'élément de couplage de sorte que le mécanisme de verrouillage interne de l'écrou s'engage sur la pluralité de poches du raccord et que la fixation de l'écrou s'engage sur la fixation de l'élément de couplage pour verrouiller le raccord avec le premier tube sur l'élément de couplage avec le second tube.

13. Procédé selon la revendication 12, comprenant en outre :
le raccordement d'un ou de plusieurs tubes supplémentaires sur une ou plusieurs parties tubulaires supplémentaires du raccord, dans lequel les une ou plusieurs parties tubulaires supplémentaires du raccord sont en communication fluidique avec la première et la deuxième partie tubulaire.

14. Procédé selon la revendication 12 ou 13, dans lequel le premier tube est raccordé au raccord par soudage, brasage ou collage.

15. Procédé selon la revendication 12, 13 ou 14, dans lequel le raccord est un raccord en Y (60), un raccord en T (42) ou un raccord coudé (10).
